(19) Europäisches Patentamt
European Patent Office
Office européen des brevets

(11) EP 2 713 740 B1

(12) **EUROPEAN PATENT SPECIFICATION**

(45) Date of publication and mention of the grant of the patent:
**07.10.2015 Bulletin 2015/41**

(21) Application number: **12723896.2**

(22) Date of filing: **24.05.2012**

(51) Int Cl.:
***A01N 55/00*** *(2006.01)* ***A01N 25/30*** *(2006.01)*
***A01N 33/12*** *(2006.01)* ***A01N 47/44*** *(2006.01)*
***A01P 5/00*** *(2006.01)*

(86) International application number:
**PCT/GB2012/051175**

(87) International publication number:
**WO 2012/160386 (29.11.2012 Gazette 2012/48)**

(54) **SURFACE TREATMENT METHOD**

OBERFLÄCHENBEHANDLUNGSVERFAHREN

METHODE DE TRAITEMENT D'UNE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2011 GB 201108797**

(43) Date of publication of application:
**09.04.2014 Bulletin 2014/15**

(73) Proprietor: **Arcis Biotechnology Holdings Limited**
**Warrington WA4 4AB (GB)**

(72) Inventors:
- **GARNER, George Victor**
**Stockport SK3 8TL (GB)**
- **ROGERS, Jan**
**Chester CH2 2RA (GB)**
- **TAYLOR, Victoria**
**Swansea SA6 6TD (GB)**

(74) Representative: **Appleyard Lees**
**15 Clare Road**
**Halifax HX1 2HY (GB)**

(56) References cited:
**EP-A1- 2 274 985** **WO-A1-95/12977**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 713 740 B1

## Description

The present invention relates to a method of treating a grass-carrying surface. In particular the invention relates to methods of treating grass-carrying surfaces with compositions having long lasting efficacy and which can be applied in aqueous solution.

Grass-carrying surfaces are enjoyed by people the world over and provide a natural habitat for wildlife and food for livestock.

In this specification a grass-carrying surface may refer to any surface on which grass grows on at least a part thereof. Thus the grass-carrying surface treated by the method of the present invention may be a natural wild area on which grass is one of a number of plants which grows. It may be a meadow or field in which farm animals graze.

However the method relates in particular to surfaces on which grass is deliberately grown. Such surfaces include, but are not limited to, surfaces used for leisure purposes. Grass-carrying surfaces are found in gardens and parks and are used by very many people. Millions of people participate in sports played on grass-carrying surfaces including football, rugby, hockey, golf, tennis, cricket and horse-racing. For many sports it is important to maintain a good even coverage of grass on the surface to ensure the condition of the surface does not interfere with the game. This is especially important for grass-carrying surfaces on which professional sports are played. Professional sports attract very large audiences and a poor quality surface can affect the performance of the players and spoil the enjoyment of the game for spectators.

A particular problem that has increased in recent years is damage to grass, especially turf grass that is used on sports playing surfaces, by nematodes.

Nematodes are microscopic unsegmented worms which may exist as free-living species feeding on bacteria or fungi or as parasitic species surviving on animal or plant hosts. While free-living nematodes may be a generally beneficial part of the eco-system, plant parasitic nematodes are now a significant problem, especially for the turf grass industry.

There are two major types of parasitic nematodes which attack turf grass. Ectoparasites live in the plant soil and feed on the root cells; endoparasitic species enter the root and migrate through the plant before starting to feed.

Both types of parasite can cause significant damage to the plant. The roots will be weakened and become much more shallow and sparse. Damage to the roots can lead to reduction in uptake of nutrients and water, as well as disrupting the synthesis of plant growth regulators. Nematode parasites also divert energy from the plant.

Turf grass infected with parasitic nematodes will typically become weaker and less resistant to stress. This is a particular problem on surfaces on which sports are played as the grass is less able to withstand wear and tear. The effects are often non-uniform as nematodes are not usually evenly distributed in the soil. As a result some areas of a sports playing surface may suffer extensive damage necessitating replacement of the turf. This is costly and inconvenient and new turf often needs time to settle before it can be played upon.

Traditional nematicidal treatments for turf grass have involved the use of organophosphate compounds. However these are toxic to humans and cause damage to the environment.

Nitrogen-based compounds like quaternary ammonium compounds have been used against nematodes as taught in WO 95/12977.

There therefore exists the need to provide a nematicidal composition having an improved environmental profile and lower toxicity.

Although nematodes are a major problem faced by turf grass manufacturers, grass is also damaged by bacteria, fungi and algae present in the soil. Thus a grass-carrying surface treatment composition which could combat bacteria and/or algae and/or fungi would also be highly beneficial.

It is an aim of the present invention to provide a method of treating a grass-carrying surface which overcomes at least one disadvantage of the prior art whether specifically mentioned herein or otherwise.

According to a first aspect of the present invention there is provided a method of treating a grass-carrying surface, the method comprising applying to the grass-carrying surface:

(a) a compound of formula (I):

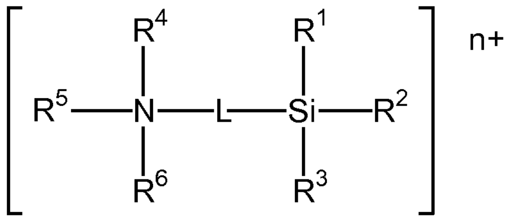

(I)

or a derivative salt thereof wherein L is a linking group; each of $R^1$, $R^2$ and $R^3$ is independently selected from an optionally substituted alkyl, alkenyl, aryl or alkoxy group; $R^4$ is oxygen or an optionally substituted alkyl, alkenyl or aryl group; each of $R^5$ and $R^6$ is an optionally substituted alkyl, alkenyl or aryl group; and n is 0 or 1;

(b) at least one cationic biocide;

(c) a hydrocarbyl saccharide compound; and

(d) a non-ionic surfactant.

Compounds of formula (I) are known from e.g. EP2274985.

The method of the present invention involves applying to a grass-carrying surface components (a), (b), (c) and (d). These may be applied to the surface separately or in one or more combinations. When they are applied separately they may be applied in any order. In preferred embodiments components (a), (b), (c) and (d) are applied in combination. Preferably the method of the present invention involves applying to the grass-carrying surface a composition comprising components (a), (b), (c) and (d). Preferred compositions are aqueous compositions.

Although the present invention may involve applying two or more compositions to the grass-carrying surface, in preferred embodiments a single composition is applied. References in this specification to the composition which is applied to the grass-carrying surface preferably refer to such a single composition comprising all of components (a), (b), (c) and (d). However it is within the scope of the invention to apply a plurality of compositions such that some components are applied separately.

The composition applied to the grass-carrying surface comprises a compound of formula (I).

It will be appreciated that in embodiments in which n is 1, the species shown in formula (I) is a cationic species.

In such embodiments the species of formula (I) will be present as an adduct or salt including a suitable counterion. However for ease of reference, in this document we may make general reference to compounds of formula (I) and any such reference includes where appropriate any counterion which must be present.

Any suitable counterion may be used. Monovalent counterions are preferred. Suitable counterions include halides and oxyhalo ions for example chloride, bromide, bromite, chlorite, hypochlorite, chlorate, bromate and iodate.

In embodiments in which $R^4$ is O, the compound has the structure shown in formula (II) and n is 0:

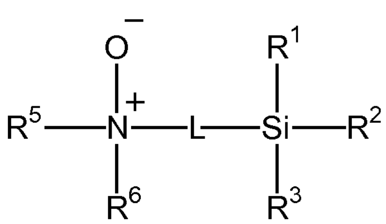

(II)

In preferred embodiments in which $R^4$ is not O, n is 1 and a suitable counterion is present.

In preferred embodiments $R^4$ is not oxygen and the compound of formula (I) is preferably a quaternary ammonium salt.

In this specification any optionally substituted alkyl, alkenyl, aryl or alkoxy group may be optionally substituted with one or more substituents selected from halo, hydroxy, nitro, mercapto, amino, alkyl, alkoxy, aryl, sulfo and sulfoxy.

Preferred substituents which may be present in the alkyl, alkenyl, aryl or alkoxy groups defined herein are halogens, in particular fluorine. In particular each of $R^1$, $R^2$, $R^3$, $R^4$, $R^5$ or $R^6$ may comprise fluoroalkyl or fluoroalkoxy groups in which one or more hydrogen atoms are substituted with fluorine.

Each of $R^1$, $R^2$ and $R^3$ is independently selected from an optionally substituted alkyl, alkenyl, aryl or alkoxy group. Preferably at least one of $R^1$, $R^2$ and $R^3$ is an optionally substituted alkoxy group. More preferably each of $R^1$, $R^2$ and $R^3$ is an optionally substituted alkoxy group, most preferably each is an unsubstituted alkoxy group. The alkyl group of the alkoxy group may be straight chained or branched. Preferably each of $R^1$, $R^2$ and $R^3$ is an alkoxy group having from 1 to 20 carbon atoms, preferably from 1 to 16 carbon atoms, more preferably from 1 to 12 carbon atoms, preferably from 1 to 8 carbon atoms, suitably from 1 to 6 carbon atoms, more preferably from 1 to 4 carbon atoms.

In preferred embodiments each of $R^1$, $R^2$ and $R^3$ is independently selected from methoxy, ethoxy, propoxy, butoxy and isomers thereof. Most preferably each of $R^1$, $R^2$ and $R^3$ is selected from methoxy, ethoxy and isopropoxy. Preferably each of $R^1$, $R^2$ and $R^3$ is selected from methoxy and ethoxy. Most preferably each of $R^1$, $R^2$ and $R^3$ is methoxy. Preferably each of $R^1$, $R^2$ and $R^3$ is the same.

In embodiments in which $R^1$, $R^2$ and $R^3$ are substituted alkoxy they are preferably fluoro substituted alkoxy in which all of the hydrogen atoms have been replaced with fluorine atoms. Thus in some embodiments each of $R^1$, $R^2$ and $R^3$ may be independently selected from trifluoromethoxy, pentafluoroethoxy, heptafluoropropoxy, nonafluorobutoxy and isomers thereof.

$R^4$ may be oxygen or an optionally substituted alkyl, alkenyl, or aryl group. Preferably $R^4$ is an optionally substituted alkyl group.

$R^4$ is preferably an alkyl group or a fluoro-alkyl group. When $R^4$ is a fluoroalkyl group it is preferably an alkyl group in which all of the hydrogen atoms have been replaced by fluorine. These may be referred to as perfluoro-alkyl groups. Preferred fluoroalkyl groups are those having from 1 to 20 carbon atoms, preferably 1 to 16 carbon atoms, more preferably 1 to 12 carbon atoms, preferably 1 to 8 carbon atoms, for example 1 to 6 carbon atoms, most preferably 1 to 4 carbon atoms. Preferred fluoroalkyl groups are trifluoromethyl, pentafluoroethyl, heptafluoropropyl, nonafluorobutyl and isomers thereof. Nonafluorobutyl is especially preferred.

Preferably $R^4$ is an alkyl group, most preferably an alkyl group having 1 to 24 carbon atoms, preferably 1 to 18 carbon atoms, more preferably 1 to 12 carbon atoms, suitably 1 to 8 carbon atoms, more preferably 1 to 4 carbon atoms. Most preferably $R^4$ is selected from methyl, ethyl, propyl, butyl and isomers thereof. More preferably $R^4$ is selected from ethyl and methyl. Most preferably $R^4$ is methyl.

Each of $R^5$ and $R^6$ may be independently selected from an optionally substituted alkyl, alkenyl, aryl or alkoxy group.

Most preferably each of $R^5$ and $R^6$ is an optionally substituted alkyl or alkoxy group, most preferably an optionally substituted alkyl group. Each of $R^4$, $R^5$ and $R^6$ may be a fluoroalkyl group in which some or preferably all of the hydrogen atoms have been replaced by fluorine atoms. Preferred fluoroalkyl groups are those having from 1 to 20 carbon atoms, preferably 1 to 16 carbon atoms, more preferably 1 to 12 carbon atoms, for example 1 to 10 carbon atoms.

In embodiments in which each of $R^5$ and $R^6$ is fluoroalkyl, each may be a fluoroalkyl group having 4 to 10 carbon atoms, for example 8 carbon atoms.

In some preferred embodiments each of $R^5$ and $R^6$ is an alkyl group, suitably an unsubstituted alkyl group. The alkyl group may be straight chained or branched. In such embodiments $R^5$ is preferably an alkyl group having more than 8 carbon atoms and $R^6$ is preferably an alkyl group having less than 8 carbon atoms.

Preferably $R^5$ is an alkyl group having from 8 to 30 carbon atoms, for example from 10 to 26 carbon atoms, suitably from 12 to 24 carbon atoms, preferably from 14 to 22 carbon atoms, suitably from 16 to 20 carbon atoms, for example 17 to 19 carbon atoms, suitably 18 carbon atoms.

$R^6$ is preferably an alkyl group having from 1 to 8 carbon atoms, most preferably 1 to 6 carbon atoms, more preferably 1 to 4 carbon atoms. $R^6$ may suitably be selected from methyl, ethyl, propyl, butyl and isomers thereof. Preferably $R^6$ is methyl or ethyl. Most preferably $R^6$ is methyl.

L is a linking group. It may suitably be a bond or an optionally substituted alkylene, alkenylene or arylene group. Preferably L is an optionally substituted alkenylene group. It may be substituted along the chain or within the chain. For example L may be an ether linking moiety, i.e. a group of formula $O(CH_2)_n$ in which n is 1 to 12, preferably 1 to 6.

Preferably L is an unsubstituted alkylene group, more preferably an alkylene group having 1 to 12 carbon atoms, preferably 1 to 10 carbon atoms, suitably 1 to 8 carbon atoms, for example 2 to 8 carbon atoms, more preferably 2 to 6 carbon atoms, suitably 2 to 5 carbon atoms for example 2 to 4 carbon atoms. In especially preferred embodiments L is a propylene group.

In especially preferred embodiments of the compound of formula (I), $R^1$, $R^2$ and $R^3$ are each $C_1$ to $C_4$ alkoxy, L is a $C_2$ to $C_5$ alkylene group, A is nitrogen, $R^4$ and $R^6$ are each $C_1$ to $C_4$ alkyl groups and $R^5$ is a $C_{12}$ to $C_{24}$ alkyl group.

Most preferably the compound of formula (I) is the compound shown in formula (III):

a compound of formula (III):

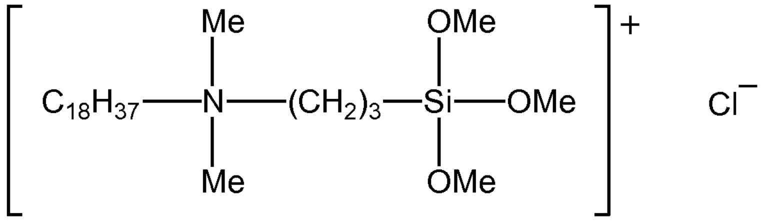

(III)

This compound is commercially available as a solution in methanol. It may suitably be incorporated in the composition in a highly concentrated form, preferably comprising at least 90 wt% or at least 95 wt% active ingredient.

Component (a) is preferably present in the composition which is applied to the grass-carrying surface in an amount of at least 0.1 ppm, preferably at least 0.5 ppm, more preferably at least 1 ppm, preferably at least 2.5 ppm, suitably at least 5 ppm, preferably at least 7.5 ppm, preferably at least 10 ppm, for example at least 15 ppm.

Component (a) may be present in the composition which is applied to the grassy surface in an amount of up to 20000, suitably up to 10000 ppm, preferably 5000 ppm, more preferably up to 4000 ppm, suitably up to 3000 ppm, preferably up to 2000 ppm, preferably up to 1750 ppm, for example up to 1500 ppm.

In some embodiments the composition may comprise up to 1000 ppm, up to 500 ppm, up to 400 ppm, up to 300 ppm, up to 200 ppm, up to 150 ppm or up to 100 ppm component (a). The amount of component (a) may vary depending on the nature of the grass-carrying surface to which the composition is applied and the intended use of that surface.

In some embodiments the composition may comprise from 50 to 120 ppm component (a), for example from 70 to 90 ppm.

In some embodiments the composition may comprise from 200 to 300 ppm component (a), for example from 230 to 250 ppm.

In some embodiments the composition may comprise from 600 to 1000 ppm component (a), for example from 750 to 850 ppm.

In some embodiments the composition may comprise from 1000 to 1500 ppm component (a), for example from 1150 to 1250 ppm.

For the avoidance of doubt "ppm" in this specification refers to parts per million by weight.

Component (a) may comprise a mixture of compounds. In such embodiments the above amounts refer to all such compounds present in the composition.

Components (a) may be incorporated into the composition along with a diluent or carrier. The above definitions refer to the amount of active component present.

The composition used in the method of the present invention comprises one or more cationic biocides, component (b).

Preferred cationic biocides for use herein include quaternary ammonium based biocides and guanidine-containing biocide compounds.

For the avoidance of doubt, the definition of one or more cationic biocides of component (b) does not include component (a). Compounds of formula (I) are known to have biocidal properties. Component (a) may provide some biocidal activity in the compositions of the present invention. However any description of cationic biocide or a quaternary ammonium salt as a cationic biocide of component (b) does not refer to component (a).

Preferably the composition which is applied to the grass-carrying surface comprises at least 0.5 ppm of cationic biocide component (b), preferably at least 1 ppm, more preferably at least 2.5 ppm, preferably at least 5 ppm, suitably at least 7.5 ppm, preferably at least 10 ppm, more preferably at least 15 ppm, suitably at least 20 ppm, preferably at least 25 ppm.

The composition suitably comprises up to 20000 ppm cationic biocide component (b), preferably up to 10000 ppm suitably up to 5000 ppm, preferably up to 4000 ppm, suitably up to 3000 ppm, for example up to 2000 ppm or up to 1700 ppm.

In some embodiments the composition may comprise up to 5000 ppm, up to 1000 ppm, up to 500 ppm, up to 400 ppm, up to 300 ppm, up to 200 ppm or up to 170 ppm component (b). The amount of component (b) may vary depending on the nature of the grass-carrying surface to which the composition is applied and the intended use of that surface.

In some embodiments the composition may comprise from 100 to 200 ppm component (b), for example from 120 to 160 ppm.

In some embodiments the composition may comprise from 350 to 475 ppm component (b), for example from 400 to 440 ppm.

In some embodiments the composition may comprise from 1000 to 1700 ppm component (b), for example from 1300 to 1500 ppm.

In some embodiments the composition may comprise from 1500 to 2500 ppm component (b), for example from 2000 to 2200 ppm.

Component (b) may be incorporated into the composition along with a diluent or carrier. The above definitions refer to the amount of active component present.

A mixture of two or more cationic biocide components may be present in component (b) of the compositions used in the present invention. In such embodiments the above amounts refer to all such cationic biocides present. In some preferred embodiments component (b) comprises at least two cationic biocides.

Suitably component (b) comprises a cationic biocide selected from a quaternary ammonium salt, a guanidine based compound or a mixture thereof.

Suitable quaternary ammonium cationic biocides have the structure shown in formula (V):

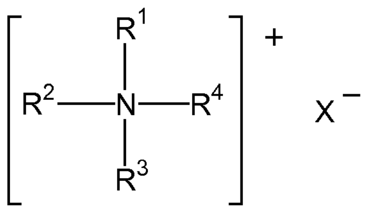

(V)

where each of $R^1$, $R^2$, $R^3$ and $R^4$ is an optionally substituted alkyl, alkenyl, alkylaryl or aryl group and $X^-$ is a suitable anion. Preferably each of $R^1$, $R^2$, $R^3$ and $R^4$ is an optionally substituted alkyl or alkylaryl group, more preferably an unsubstituted alkyl or alkylaryl group.

Any suitable anion $X^-$ may be used. X may be selected from halide, acetate, nitrite, a lower alkosulfate, carbonate or alkyl carboxylate. Preferably X is chloride or bromide.

Each of $R^1$, $R^2$, $R^3$ and $R^4$ may be an unsubstituted alkyl group having from 1 to 30 carbon atoms or an alkylaryl group, for example a benzyl group.

Preferably at least one of $R^1$, $R^2$, $R^3$ and $R^4$ is an unsubstituted alkyl group having at least 6 carbon atoms, preferably at least 8 carbon atoms.

In one preferred embodiment $R^1$ is an alkyl group having from 6 to 30 carbon atoms, preferably from 8 to 24 carbon atoms, suitably from 8 to 20 carbon atoms, for example from 10 to 18 carbon atoms and most preferably from 12 to 16 carbon atoms; each of $R^2$ and $R^3$ is an alkyl group having from 1 to 4 carbon atoms, preferably methyl and $R^4$ is an alkylaryl group, preferably benzyl. Thus a particularly preferred cationic biocide for use herein is a benzyldimethylalkyl ammonium chloride or bromide in which the alkyl group has from 12 to 16 carbon atoms. The skilled person will appreciate that such compounds may often be present as a mixture of homologues.

In another preferred embodiment the cationic biocide of formula (V) is one in which each of $R^1$ and $R^2$ is an alkyl group having from 6 to 20 carbon atoms, preferably from 6 to 16 carbon atoms, suitably from 8 to 12 carbon atoms, for example from 8 to 10 carbon atoms; and $R^3$ and $R^4$ is each an alkyl group having 1 to 4 carbon atoms, preferably methyl. One especially preferred cationic biocide for use herein is didecyldimethyl ammonium chloride or bromide.

The composition applied to the surface may comprise at least 0.5 ppm quaternary ammonium salts, preferably at least 1 ppm, preferably at least 5 ppm, suitably at least 10 ppm, preferably at least 25 ppm, for example at least 50 ppm.

The composition may comprise up to 10000 ppm, up to 5000 ppm, up to 4000 ppm, up to 3000 ppm, or 2000 ppm, quaternary ammonium salts. The amount of quaternary ammonium salt may vary depending on the nature of the grass-carrying surface to which the composition is applied and the intended use of that surface.

In some embodiments the composition may comprise from 50 to 150 ppm quaternary ammonium salt, for example from 90 to 110 ppm.

In some embodiments the composition may comprise from 200 to 400 ppm quaternary ammonium salt, for example from 280 to 320 ppm.

In some embodiments the composition may comprise from 750 to 1250 ppm quaternary ammonium salt, for example from 950 to 1150 ppm.

In some embodiments the composition may comprise from 1250 to 1750 ppm quaternary ammonium salt, for example from 1450 to 1550 ppm.

The composition which is applied to the grass-carrying surface may suitably comprise from 0.1 to 1000 ppm of one or more quaternary ammonium biocides, preferably 1 to 500 ppm, more preferably 5 to 200 ppm, for example from 10 to 150 ppm or from 20 to 120 ppm. For the avoidance of doubt these amounts do not include component (a).

The above amounts refer to the total of all quaternary ammonium salts present in the composition. These may be incorporated into the composition along with a diluent or carrier. The above definitions refer to the amount of active component present.

In some embodiments component (b) comprises only quaternary ammonium salts.

In some embodiments component (b) comprises one or more quaternary ammonium salts and one or more guanidine derived cationic biocides.

Suitable guanidine derived cationic biocide compounds for use herein include guanidine based compounds, diguanidine based compounds and polymeric guanidine based compounds.

Suitable guanidine based compounds include biguanidine and polymeric guanidine compounds of formula (VI):

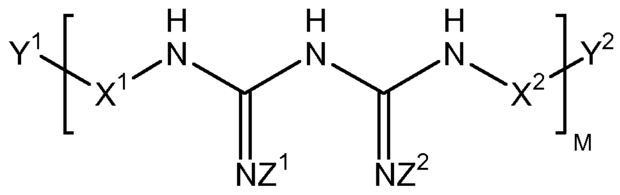

(VI)

wherein $X^1$ and $X^2$ are either a hydrogen or any aliphatic, cycloaliphatic, aromatic, substituted aliphatic, substituted aromatic, heteroaliphatic, heterocyclic, and/or heteroaromatic compound. $X^1$ and $X^2$ can be the same or different. $Y^1$ and $Y^2$ are any aliphatic, cycloaliphatic, aromatic, substituted aliphatic, substituted aromatic, heteroaliphatic, heterocyclic, and/or heteroaromatic compound. $Y^1$ and $Y^2$ can be the same or different. M is an number equal to or greater than 1. Typically, M has an average value such that the molecular weight of the biguanide compounds is about 1000-1400; however, the molecular weight can be higher or lower. Generally M is about 2-20. $Z^1$ and $Z^2$ are either a hydrogen or a salt. $Z^1$ and $Z^2$ can be the same of different. In another and/or alternative aspect of this embodiment, the above-mentioned organic materials can be modified to include a thiol group in their structure so as to allow for the bonding of the compound to a metallic substrate, and/or may be derivatized with other functional groups to permit direct immobilization on a non-metallic substrate. In still another and/or alternative aspect of this embodiment, the above-mentioned organic materials may also be suitably functionalized to incorporate groups such as, but not limited to, hydroxy, amine, halogen, epoxy, alkyl and/or alkoxy silyl functionalities to enable direct immobilization to a surface. In yet another and/or alternative aspect of this embodiment, the salt can include, but is not limited to, salts with an inorganic acid such as, but not limited to, hydrochloride, hydrofluoride, nitrate, sulfate and/or phosphate, and/or salts with an organic acid such as, but not limited to, carboxylic acid, acetate, benzoate, tartrate, adipate, lactate, formate, maleate, glutamate, ascorbate, citrate, gluconate, oxalate, succinate, pamoate, salicylate, isethionate, succinamate, mono-diglycollate, dimethanesulfonate, di-isobutyrate, and/or glucoheptonate. Specific examples of these compounds include, but are not limited to, polyhexamethylene biguanide hydrochloride, p-chlorophenyl biguanide, and 4-chlorobenzhydryl biguanide. In still yet another and/or alternative aspect of this embodiment, the biguanide compound includes, but is not limited to, halogenated hexidine such as, but not limited to, chlorhexidine (1,1'-hexamethylene-bis-5-(4-chlorophenyl biguanide) and its salts. The salts include, but are not limited to, salts with an inorganic acid, such as hydrochloride, hydrofluoride, nitrate, sulfate and/or phosphate, and/or salts with an organic acid such as, but not limited to, carboxylic acid, acetate, benzoate, tartrate, adipate, lactate, formate, maleate, glutamate, ascorbate, citrate, gluconate, oxalate, succinate, pamoate, salicylate, isethionate, succinamate, mono-diglycollate, dimethanesulfonate, di-isobutyrate, and/or glucoheptonate. Examples of salts of chlorhexidine include, but are not limited to, chlorhexidine diphosphanilate, chlorhexidine digluconate, chlorhexidine diacetate, chlorhexidine dihydrochloride, chlorhexidine dichloride, chlorhexidine gluconate, chlorhexidine dihydroiodide, chlorhexidine diperchlorate, chlorhexidine dinitrate, chlorhexidine sulfate, chlorhexidine sulfite, chlorhexidine thiosulfate, chlorhexidine di-acid phosphate, chlorhexidine difluorophosphate, chlorhexidine diformate, chlorhexidine dipropionate, chlorhexidine di-iodobutyrate, chlorhexidine di-valerate, chlorhexidine dicaproate, chlorhexidine malonate, chlorhexidine succinate, chlorhexidine malate, chlothexidine tartrate, chlorhexidine dimonoglycolate, chlorhexidine monodiglycolate, chlorhexidine dilactate, chlorhexidine di-alpha-hydroxyisobutyrate, chlorhexidine diglucoheptonate, chlorhexidine di-isothionate, chlorhexidine dibenzoate, chlorhexidine dicinnamate, chlorhexidine dimandelate, chlorhexidine di-isophthalate, chlorhexidine di-2-hydroxynapthoate, and chlorhexidine embonate.

Especially preferred diguanidine cationic biocides for use herein include polyhexamethylene biguanide, chlorhexidine and salts and mixtures thereof.

The composition may comprise at least 0.5 ppm of a guanidine based cationic biocide, preferably at least 1 ppm, preferably at least 5 ppm, suitably at least 10 ppm, for example at least 20 ppm.

In some embodiments the composition may comprise up to 1000 ppm, up to 500 ppm, up to 400 ppm, up to 300 ppm, up to 200 ppm, up to 150 ppm or up to 100 ppm of guanidine based cationic biocide. The amount of component

(a) may vary depending on the nature of the grass-carrying surface to which the composition is applied and the intended use of that surface.

The composition which is applied to the grass-carrying surface may comprise from 0.1 to 1000 ppm of a guanidine based cationic biocide, preferably 1 to 500 ppm for example from 1 to 100 ppm or from 5 to 60 ppm.

In some embodiments the composition may comprise from 20 to 60 ppm of a guanidine based cationic biocide, for example from 30 to 50 ppm.

In some embodiments the composition may comprise from 60 to 100 ppm of a guanidine based cationic biocide, for example from 70 to 90 ppm.

In some embodiments the composition may comprise from 300 to 500 ppm of a guanidine based cationic biocide, for example from 375 to 425 ppm.

In some embodiments the composition may comprise from 500 to 700 ppm of a guanidine based cationic biocide, for example from 550 to 650 ppm.

A mixture of guanidine based cationic biocide may be present. In such embodiments the above amounts refer to the total of all such compounds present in the composition. The guanidine based cationic biocide may be incorporated into the composition along with a diluent or carrier. The above definitions refer to the amount of active component present.

In some preferred embodiments component (b) of the present invention comprises a quaternary ammonium salt and a guanidine based compound.

Component (c) is a hydrocarbyl-saccharide compound. By this we mean to refer to a compound including a hydrocarbyl group and a saccharide moiety.

The hydrocarbyl group may be bound to the saccharide moiety via a carbon-carbon bond or via a carbon-oxygen bond. Preferably it is bound to the saccharide moiety via a carbon-oxygen bond, for example via an ester linkage or an ether linkage. Most preferably it is bound to the oligosaccharide moiety via an ether linkage. Thus in preferred embodiments component (c) is a hydrocarbyl ether of a saccharide moiety.

Component (c) may include one or more hydrocarbyl groups. Preferably it comprises one hydrocarbyl group. The hydrocarbyl group may be an optionally substituted alkyl, alkenyl or alkynylene group. Most preferably it is an optionally substituted alkyl group. Suitable substituents include halo, hydroxy, nitro, mercapto, amino, alkyl, alkoxy, aryl, sulfo and sulfoxy. Any subsubstitution may be within the chain or along it, for example the chain may include an ether linkage.

Preferably the hydrocarbyl group is an unsubstituted alkyl group. It may be straight chained or may be branched. Most preferably it is straight chained. Especially preferred hydrocarbyl groups are alkyl groups having from 1 to 30 carbon atoms, preferably 2 to 24 carbon atoms, more preferably from 4 to 20 carbon atoms, suitably from 4 to 16 carbon atoms, preferably from 6 to 14 carbon atoms, for example from 6 to 12 carbon atoms and most preferably from 8 to 10 carbon atoms. Preferred are straight chained alkyl groups having from 6 to 12 carbon atoms.

The saccharide moiety of the hydrocarbyl oligosaccharide species may include from 1 to 10 monosaccharide species. Thus it may be a monosaccharide unit, a disaccharide unit or an oligosaccharide unit. Preferably the saccharide moiety comprises from 2 to 8, suitably from 2 to 6, preferably from 2 to 5, for example 3 or 4 monosaccharide units. Any suitable monosaccharide unit may be included. Preferred saccharides include allose, altrose, glucose, mannose, gulose, idose, galactose and talose.

Mixtures of two or more monosaccharides may be present in the saccharide moiety. Preferably the saccharide moiety comprises glucose. More preferably all of the monosaccharide units present in the saccharide moiety are glucose. In especially preferred embodiments component (c) comprises an alkylpolyglucoside, preferably a monoalkyl-polyglucoside. Suitably component (c) comprises a compound of formula (IV):

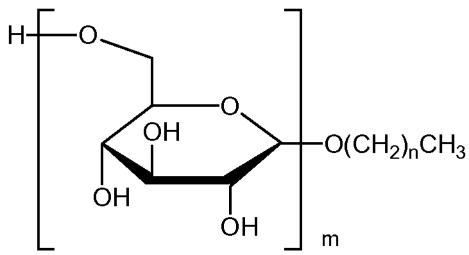

(IV)

wherein n is from 5 to 12, preferably from 6 to 10, more preferably from 7 to 9 and m is from 1 to 6, preferably from 1 to 4, more preferably 1 or 2.

Component (c) may be present in the composition which is applied to the grass-carrying surface in an amount of at least 0.1 ppm, preferably at least 0.5 ppm, more preferably at least 1 ppm, preferably at least 2.5 ppm, suitably at

least 5 ppm, more preferably at least 10 ppm, preferably at least 15 ppm.

Component (c) may be present in the composition which is applied to the grassy surface in an amount of up to 20000 ppm, preferably up to 10000 ppm, more preferably up to 5000 ppm, suitably up to 4000 ppm, preferably up to 3000 ppm, more preferably up to 2000 ppm, preferably up to 1750 ppm, for example up to 1500 ppm.

In some embodiments the composition may comprise up to 1000 ppm, up to 500 ppm, up to 400 ppm, up to 300 ppm, up to 200 ppm, up to 150 ppm or up to 100 ppm component (c). The amount of component (c) may vary depending on the nature of the grass-carrying surface to which the composition is applied and the intended use of that surface.

In some embodiments the composition may comprise from 50 to 120 ppm component (c), for example from 70 to 90 ppm.

In some embodiments the composition may comprise from 200 to 300 ppm component (c), for example from 230 to 250 ppm.

In some embodiments the composition may comprise from 600 to 1000 ppm component (c), for example from 750 to 850 ppm.

In some embodiments the composition may comprise from 1000 to 1500 ppm component (c), for example from 1150 to 1250 ppm.

Component (c) may comprise a mixture of compounds. In such embodiments the above amounts refer to all such components present in the composition.

Component (c) may be incorporated into the composition along with a diluent or carrier. The above definitions refer to the amount of active component present.

Component (a) and component (c) are suitably present in the composition which is applied to the grass-carrying surface in a weight ratio of 5:1 to 1:5, preferably from 0:1 to 1:3, suitably from 2:1 to 1:2, for example about 1:1. The weight ratio of component (b) to component (a) is preferably from 2:1 to 1:2, more preferably from 1.5:1 to 1:1.5. Suitably it is about 1:1.

The composition applied to the grass-carrying surface in the method of the present invention may further comprise one or more additional biocide components, for example a non-ionic biocide. Suitable non-ionic biocides include 2-bromo-2-nitro-1,3-dioxane and 2-bromo-2-nitro-propane-1,3-diol.

The composition applied to the grass-carrying surface comprises component (d), a non-ionic surfactant.

Preferably the composition applied to the grass-carrying surface comprises at least 0.1 ppm non-ionic surfactant, preferably at least 0.5 ppm, more preferably at least 1 ppm, suitably at least 2.5 ppm, for example at least 5 ppm, at least 10 ppm or at least 20 ppm.

The composition may comprise up to 10000 ppm non ionic surfactant, preferably up to 5000 ppm more preferably up to 2000 ppm, suitably up to 1500 ppm, for example up to 1000 ppm or up to 750 ppm.

In some embodiments the composition may comprise up to 500 ppm, up to 250 ppm, up to 100 ppm, or up to 60 ppm component (d). The amount of component (d) may vary depending on the nature of the grass-carrying surface to which the composition is applied and the intended use of that surface.

In some embodiments the composition may comprise from 20 to 60 ppm component (d), for example from 30 to 50 ppm.

In some embodiments the composition may comprise from 60 to 100 ppm component (d), for example from 70 to 90 ppm.

In some embodiments the composition may comprise from 300 to 500 ppm component (d), for example from 375 to 475 ppm.

In some embodiments the composition may comprise from 1000 to 1500 ppm component (d), for example from 550 to 650 ppm.

Suitable nonionic surfactants include alkoxylated compounds, sugar esters and other compounds known to the person skilled in the art.

Preferred nonionic surfactants are alkoylated compounds, for example alkoxylated alcohols or esters. Preferred alkoxylated compounds are polyalkoxylated compounds.

Preferred nonionic compounds include a hydrocarbyl group and one or more ethylene oxide and/or propylene oxide residues. Preferred hydrocarbyl groups are alkyl and alkenyl groups, preferably having from 4 to 30 carbon atoms. Preferred are alkyl groups, having for example from 6 to 20 carbon atoms. Nonionic surfactants including one or more ethylene oxide residues are preferred.

Especially preferred non-ionic surfactants for use herein are alcohol alkoxylate compounds, in particular alcoholethoxylate compounds. Preferred non-ionic surfactants are those of formula $CH_3(CH_2)_nO(CH_2CH_2O)_mH$ wherein n is from 5 to 20, preferably from 6 to 15 and m is from 1 to 12, preferably from 3 to 10.

An especially preferred non-ionic surfactant comprises a mixture of isomers in which n is 9 or 11 and m is 4 to 8.

The composition applied to the grass preferably has a pH of less than 10, preferably from 2 to 9, more preferably from 3 to 6, for example from 4.5 to 6.5.

The composition applied in the method of the present invention may comprise one or more further surfactants. Suitable surfactants include anionic surfactants, cationic surfactants, non-ionic surfactants, amphoteric surfactants and mixtures thereof.

Suitable surfactants for use herein will be known to the person skilled in the art and include for example the amphoteric and non-ionic surfactants listed in US 2006/166849.

The composition used in the method of the present invention may include one or more further ingredients, for example terpenes, fragrances, preservatives, colourants and antioxidants. The composition may include one or more components for promoting grass growth and fertility for example nitrogenous fertilisers. It may include one or more components for deterring moss and/or algal growth, for example iron sulphate. Other suitable components which may be included in a grass-treatment composition will be known to the person skilled in the art.

The compositions applied to the grass-carrying surface in the method of the present invention are aqueous compositions. In some embodiments the composition may comprise a further solvent preferably a water-miscible solvent. Suitable water-miscible solvents may be present in an amount of up to 10 wt%, suitably up to 7.5 wt%, preferably up to 5 wt%, for example up to 2.5 wt%. Suitable solvents for use herein include alcohols and esters including polyhydric alcohols.

Preferably the compositions applied to the grass-carrying surface in the method of the present invention comprise at least 70 wt% water, preferably least 80 wt%, preferably at least 90 wt%, more preferably at least 95 wt%, suitably at least 97 wt%, for example at least 99 wt%.

In some preferred embodiments water is the only solvent present in the composition and it comprises less than 1 wt% other solvents or diluents. Preferably the composition applied to the grass-carrying surface is substantially free of solvents other than water.

Preferably the composition comprises less than 1 wt% alcohols, preferably less than 0.1 wt%, preferably than 0.01 wt%, preferably less than 0.001 wt% or less than 0.0001 wt%.

Preferably the composition applied to the grass carrying surface in the method of the present invention comprises less than 10000 ppm metal compounds, preferably less than 5000 ppm, more preferably less than 1000 ppm. Preferably no metal compounds are deliberately added to the composition. Small amounts of metal compounds may be present as impurities in one of the components or in trace amounts in the water used.

Preferably the composition comprises less than 1000 ppm transition metals, preferably less than 500 ppm, more preferably less than 100 ppm, especially less than 50 ppm.

According to a second aspect of the present invention there is provided a grass treatment composition comprising components (a), (b), (c) and (d). In preferred embodiments the method of the first aspect involves applying to a grass-carrying surface a composition of the second aspect. Preferred features of the second aspect, for example the nature of components (a), (b), (c) and (d), further optional components and amounts of components are as defined in relation to the first aspect.

In preferred embodiments the method of the present invention involves applying to a grass-carrying surface a composition comprising:

10 to 2500, suitably 500 to 1500 ppm of a compound of formula (I);
10 to 2500, suitably 500 to 1500 ppm of a hydrocarbyl saccharide compound;
10 to 3000, suitably 500 to 2000 ppm quaternary ammonium biocide;
5 to 1000, suitably 250 to 750 ppm guanidine based cationic biocide; and
5 to 1000, suitably 250 to 750 ppm non-ionic surfactants.

The above amounts refer to the amount of each component present in the composition which is applied to the grass-carrying surface. This composition is very dilute and a composition would usually be provided in concentrated form to be diluted by the user prior to use.

Thus in the method of the present invention a concentrated solution may be diluted prior to application to the grass-carrying surface. The present invention may further provide a concentrated grass treatment composition. Such a concentrated composition preferably comprises:

(a) from 0.01 to 10 wt%, preferably 0.05 to 5 wt%, more preferably 0.1 to 2 wt% component of a compound of formula (I);
(b) from 0.01 to 15 wt%, preferably 0.1 to 10 wt%, more preferably 0.5 to 5 wt% one or more cationic biocides;
(c) from 0.01 to 10 wt%, preferably 0.05 to 5 wt%, more preferably 0.1 to 2 wt% of a hydrocarbyl saccharide compound; and
(d) from 0.01 to 10 wt%, preferably from 0.05 to 5 wt%, more preferably from 0.1 to 1 wt% nonionic surfactant.

Suitably in such concentrated compositions component (b) comprises a mixtures of a quaternary ammonium

salt and a guanidine based compound.

Preferably the concentrated composition comprises 0.01 to 15 wt% quaternary ammonium salts, suitably 0.1 to 10 wt%, preferably 0.25 to 2.5 wt%. Preferably the concentrated composition comprises 0.01 to 6 wt% guanidine based compounds, preferably 0.05 to 4 wt%, more preferably 0.1 to 1 wt%.

Preferred features of the concentrated composition are, where appropriate, as defined in relation to the composition which is applied to the grass-carrying surface according to the method of the present invention.

The concentrated composition preferably comprises at least 60 wt% water, preferably at least 70 wt%, preferably least 80 wt%, more preferably at least 90 wt%, for example at least 95 wt%.

The concentrated composition is diluted prior to use with water suitably in a ratio of from 1:1000 to 1:2 (concentrate: water), preferably from 1:500 to 1:4.

The dilution ratio may be selected depending on the nature of the surface, other ambient conditions and the intended use of the surface.

In some situations it may be preferable to make a single application of a more concentrated compositions to the surface. In other situations, it may be preferably to make multiple applications of a less concentrated composition.

The method of the present invention may be used to treat any suitable grass-carrying surface. It may be used to treat a surface which is only partially covered by grass, for example a surface on which grass is one of a number of plants which grow.

Preferably the method of the present invention involves treating a surface on which grass is the major plant that grows. Preferably the method of the present invention involves treating a grass-covered surface. By grass-covered surface we mean to refer to a surface on which grass grows across substantially the whole area thereof. The invention may be used to treat a surface carrying any type of grass. Preferably the invention does not extend to the treatment of grasses grown for human consumption. In especially preferred embodiments the method of the present invention involves treating a surface covered with turf grass. Turf grass is grass used to cover sports playing fields, for example football or rugby pitches, race courses and golf courses. Species of grass used as turf grass include *Lolium perenne* (rye grass), *Agrostis tenius* (browntop bent), *A. stolonifera* (creeping bent grass), *Poa annua* (meadow grass), Highland bent grass and fescue grasses, for example creeping red fescues and chewing fescues.

In preferred embodiments the method of the present invention involves applying to an aqueous composition to the grass-carrying surface. Suitably it involves applying a dilute aqueous composition such as is described above.

In some embodiments however the method of the present invention may involve applying to the grass-carrying surface a solid material comprising components (a), (b), (c) and (d). Suitably the method of the present invention may comprise applying sand to a grass-carrying surface wherein the sand has been contacted with one or more compositions comprising components (a), (b), (c) and (d). Preferably the sand has been contacted with a single composition comprising components (a), (b), (c) and (d).

Sand is often applied to sports pitches in order to fill defects in the playing surface. It is believed that this sand may in some cases carry parasitic nematodes and/or other organisms such as bacteria, fungi or algae. Treatment of the sand with a composition comprising components (a), (b), (c) and (d) can help eliminate the introduction of nematodes and/or fungi and/or bacteria and/or algae onto a grass-carrying surface to which the sand is applied.

In embodiments in which sand does not contain parasitic nematodes or other microorganisms it may still be useful to treat the sand with a composition comprising components (a), (b) and (c) and (d). Treatment of the sand may be used to apply components (a) and/or (b) and optionally (c) and/or (d) to the grass-carrying surface.

Thus the method of the present invention may comprise applying to a grass-carrying surface sand which has been treated with a composition comprising:

(a) from 0.1 to 2000 ppm, preferably from 1 to 500 ppm, more preferably from 10 to 200 ppm of a component of formula (I);
(b) from 0.1 to 5000 ppm, preferably from 1 to 1000 ppm, more preferably 10 to 300 ppm of one or more cationic biocides;
(c) from 0.1 to 2000 ppm, preferably from 1 to 500 ppm, more preferably from 10 to 200 ppm of a hydrocarbyl saccharide compound and
(d) from 0.1 to 1000 ppm, preferably 1 to 500 ppm, more preferably 5 to 100 ppm of a nonionic surfactant.

Component (b) preferably includes both a quaternary ammonium salt (preferably in an amount of from 1 to 1000 ppm, preferably 5 to 200 ppm) and a guanidine based compound (preferably in an amount from 1 to 500 ppm, preferably 5 to 100 ppm).

Components (a), (b), (c) and (d) are preferably as described above.

In preferred embodiments the method of the present invention involves applying to a grass-carrying surface a dilute aqueous composition as previously defined herein. The composition may be applied to the surface by any suitable means and such means will be well known to the person skilled in the art. Preferably the composition is applied by a

method which provides an even coverage and allows controlled delivery of the composition. In some preferred embodiments the composition is applied by spraying.

Preferably the composition is applied to the grass-carrying surface in an amount of at least 10 litres per hectare (L/ha), preferably at least 50 L/ha, more preferably at least 100 L/ha, suitably at least 200 L/ha, for example at least 300 L/ha.

Suitably the composition is applied to the grass-carrying surface in an amount of up to 50000 L/ha, preferably up to 20000 L/ha, suitably up to 10000 L/ha, preferably up to 5000 L/ha, for example up to 3000 L/ha or up to 2000 L/ha.

Although the composition used in the method of the present invention is applied to a grass-carrying surface, the skilled person will appreciate that the composition will not remain on the surface and will typically be absorbed into the soil. Thus a suitable treatment level may depend on the nature of the soil on which the grass grows. Absorption of the composition into the soil allows the composition to reach the roots of the grass and thus act against any organism present in the soil which may damage the root.

Preferably the method of the present invention involves applying to the grass-carrying surface a composition which combats nematodes.

By combating nematodes we mean that the method of the present invention may be used to kill nematodes and/or prevent or inhibit the growth of nematodes.

The method of the present invention may be used to combat nematodes which live in the soil around the root of the plant (ectoparasites) and/or those which have entered the plant (endoparasites).

Preferably the compositions used in the present invention are nematicidal compositions. Preferably the compositions are nematicidal against nematodes selected from one or more of *Helicotylenchus* (spiral), *Meloidogyne* (root knot), *Heterodera* (cyst), *Tylenchorhynchus* (stunt), *Pratylenchus* (lesion), *Hemicycliophora* (sheath), *Tylenchus, Subanguina* (root gall), *Criconemella* (ring), *Paratrichodorus* (stubby root), *Paratylenchus* (pin), *Longidorus* (needle), *Pratylenchoides, Rotylenchus* (spiral).

Preferably treatment of a grass-carrying surface according to the method of the present invention leads to a reduction of at least 50% in the number of nematodes present at or near to the surface after 24 hours. Preferably there is a reduction of at least 60%, more preferably at least 70%, preferably at least 80%, more preferably at least 90%, suitably at least 95%, for example at least 98% or at least 99%. In especially preferred embodiments substantially all of the nematodes at or near a grass-carrying surface are killed 24 hours after treatment of said surface according to the method of the present invention.

In preferred embodiments the method of the present invention has long lasting efficacy. Preferably 7 days after treatment according to the method of the present invention there is a reduction in the number of nematodes at or near to a grass-carrying surface of at least 50%, preferably a reduction of at least 70%, more preferably at least 90% for example at least 95% or at least 99%.

Preferably 14 days after treatment according to the method of the present invention there is a reduction in the number of nematodes at or near to a grass-carrying surface of at least 50%, preferably a reduction of at least 70%, more preferably at least 90% for example at least 95%.

By the number of nematodes at or near to the grass-carrying surface we mean to refer to nematodes present within 30 cm of the surface. A method by which the nematode population in a soil sample can be determined is detailed in relation to example 3.

Alternatively and/or additionally the composition used in the method of the present invention may also be effective against one or more types of bacteria and/or algae and/or fungi.

In some embodiments the composition used in the method of the present invention may be used to kill bacteria and thus may be regarded as a bacteriacidal composition.

In some embodiments the composition used in the method of the present invention may prevent or inhibit the growth of bacteria and thus may be regarded as an antibacterial or bacteriostatic composition.

In some embodiments the composition used in the method of the present invention may prevent or inhibit the growth of viruses and may be regarded as antiviral composition.

In some embodiments the composition used in the method of the present invention may kill viruses and thus may be regarded as a virucidal composition.

In some embodiments the composition used in the method of the present invention may kill fungi and thus may be considered as a fungicidal composition.

In some embodiments the composition may prevent or inhibit the growth of fungi and thus may be regarded as antifungal.

In some embodiments the composition used in the method of the present invention may kill algae and/or may prevent or inhibit the growth of algae.

The method of the present invention offers significant advantages over turf-treatment methods of the prior art. The particular combination of components applied provides an effect that is both fast-acting and long lasting. The compositions used are not damaging to the environment and are non-toxic. It is also believed that the compositions may

help maintain nutrients in the soil and thus improve the grass.

The invention will now be further described with reference to the following examples.

**Example 1**

A concentrated composition was prepared comprising the following components:

0.4 wt% alcohol ethoxylate comprising a mixture of isomers of formula $CH_3(CH_2)_nO[CH_2CH_2O]_mH$ where n = 9 or 11 and m = 4 to 8;

0.8 wt% alkyl polyglucoside comprising a mixture of isomers of formula:

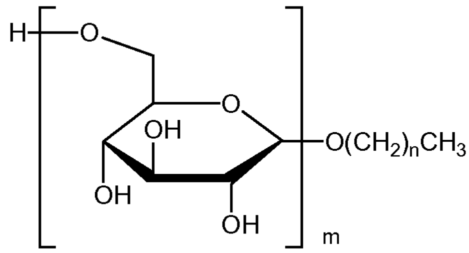

where n = 7 or 9 and m = 1 to 5;

1.0 wt% benzyl dimethyl alkyl ammonium chloride wherein alkyl represents a mixture of $C_{12}$ to $C_{16}$ alkyl groups;

0.4 wt% polyhexamethylene biguanide hydrochloride;

0.8 wt% of the compound of formula (III);

Water to 100%

This composition was diluted with water in a ratio of 1:99 to provide the application composition.

**Example 2**

The application composition of example 1 was applied to a shaded area of turf grass measuring 10m x 10m.

Four litres of the composition was applied to the 100m$^2$ area giving an application rate equivalent to 400L/ha. The number of nematodes on a 1mm slide and a 5mm slide were counted using the method of example 3 prior to application of the composition (day 0) and after 4 and 11 days following application. The results are shown in table 1:

**Table 1**

| No. of nematodes | Day 0 | Day 4 | Day 11 |
|---|---|---|---|
| 1mm slide | 301 | 0 | 3 |
| 5mm slide | >1000 | 7 | 7 |

The grass showed no signs of stress at the end of the test period.

**Example 3**

The number of nematodes in a soil sample may be counted using the following method.

**Materials**

Baermann funnel

1. Stand
2. Rubber tubing
3. Bossheads
4. Clamps
5. Kimwipes
6. Tubing Clip

Sieves - 250μm + 53μm
Small beakers
Nematode counting slide
Mircoscope

**Proecedure**

Mix soil sample received and remove 100ml.
Sieve soil thoroughly using 250μm and 53μm sieves.
Place sieved soil in Baermann funnel and saturate with water.
Leave for 24hrs.
Drain 20ml from the funnel.
Pipette 1ml onto nematode counting slide and count number of nematodes.
Use the following equation to give # nematodes per 100ml soil.
Number of nematodes counted in slide x 20 and 1.4.
If the nematode count is very high, count a representative number of cells, and multiply accordingly.

**Example 4**

Areas of turf grass were treated with the application composition of example 1 in the following amounts:

(e) 400L/ha
(f) 800L/ha
(g) 1200L/ha

In each case no stress was observed on any part of the treatment area 17 days after application.

**Example 5**

A sunny area of turf grass was treated with 400L/ha of the application composition prepared in example 1. No stress was observed 6 days after treatment.

**Example 6**

Containers (volume 25cm$^3$) were filled with one of 4 rootzone types:

A) USGA sand rootzone
B) 70/30 sand soil rootzone
C) loam soil
D) compost (peat based)

Dampened rootzones were inoculated with approximately 1000 nematodes. The nematode inoculum contained approximately: 500 *Helicotylenchus,* 200 *Tylenchorhynchus,* 100 *Heterodera* juveniles, 150 *Meloidogyne* juveniles and 50 *Trichodorus.* After 24 hours the containers were treated with 2cm$^3$ of the concentrated composition of example 1

diluted to 10%, 5%, 1%, 0.1%, 0.01% and 0.001% (weight per volume). A control composition containing 100% water was also used.

48 hours after treatment, rootzone samples were extracted using the method of example 3 and the numbers of viable nematodes recovered from each rootzone were recorded. To ensure that they were killed the nematodes were washed with fresh water and reassessed after 24 hours.

All of the experiments were repeated 3 times and the average results are shown in table 2. No differentiation between species of nematodes was observed and the results give the total number of nematodes present 48 hours after treatment.

**Table 2**

| Concentration of concentrated composition of example 1 (Y.w/v) | USGA Sand rootzone | 70/30 sand soild rootzone | Loam soil | Compost (peat based) |
|---|---|---|---|---|
| 0 (control) | 837 | 888 | 866 | 939 |
| 0.001 | 864 | 824 | 876 | 897 |
| 0.01 | 450 | 637 | 752 | 829 |
| 0.1 | 605 | 673 | 670 | 780 |
| 1 | 296 | 352 | 446 | 539 |
| 5 | 326 | 416 | 483 | 502 |
| 10 | 173 | 274 | 338 | 622 |

**Example 7**

The effects of the concentrated composition of example 1 on nematode populations (plant parasitic and beneficial nematodes) in a USGA sand-based rugby pitch were tested in a small scale replicated plot experiment.

Test plots (2x1 m) were established in an area of turf exhibiting nematode stress. During the period of the trial soil temperatures were low (3-8°C) with regular snow and rain showers.

Day 1: Pre treatment nematode levels (3x replication) were determined by extracting 300cm$^3$ rootzone samples (using a 12.5cm deep auger).

Day 3: The right hand half of each of the plots were treated with test solutions at a rate of 500 litres test solution per Ha:

The solutions used were:

- the concentrated composition of example 1 at concentrations (w/v) of 10%, 5% and1%,
- control ($H_2O$).

The solutions were then irrigated into the rootzone with 10mm of water.

Day 7: Plots were treated again with test solutions as above.

Day 17: Plots were re-sampled and post treatment nematode levels assessed. Plots were also examined for any evidence of phytotoxicity.

Changes in nematode population levels within test plots were expressed as the ratio of the final population to the initial population.

The results shown in Table 3 are the average of 3 replications of the test.

**Table 3**

| Concentration of concentrated composition of example 1 (%w/v) | $\frac{\text{Final population}}{\text{Initial population}}$ |
|---|---|
| 0 | 1 |
| 1 | 0.6 |
| 5 | 0.6 |

(continued)

| Concentration of concentrated composition of example 1 (%w/v) | Final population / Initial population |
|---|---|
| 10 | 0.5 |

**Example 8**

Experiments were carried out to assess whether the compositions of the present invention show any phytotoxicity.

Glasshouse phytotoxicity tests were carried out on *Lolium perenne* (ryegrass), *Agrostis tenuis* (browntop bent), *A. stolonifera* (creeping bentgrass), *Poa annua* (meadowgrass) of varying ages to help determine if phytotoxicity is age dependant in turfgrass.

Pots (10cm diameter) containing turfgrasses of a range of ages ( 7 days; 21 days; 40 days; 80 days) were treated with 20cm$^3$ of the application composition of example 1, followed by irrigation with 40 cm$^3$ water to wash the composition from the leaf. Pots were monitored for evidence of any phytotoxicity or growth effects.

No phytotoxicity or adverse growth effects were detected in 21-80 day old *Lolium perenne* (ryegrass), *Agrostis tenuis* (browntop bent), *A. stolonifera* (creeping bentgrass) and *Poa annua* (meadowgrass).

In contrast, analogous treatment with a commercially available nematicidal composition comprising fufural showed severe phototoxicity.

**Example 9**

In many elite soccer and rugby stadia, summer renovations involve the removal of the pitch surface, application of clean rootzone and re-seeding. The renovation period also offers a window of opportunity to sterilise the pitch rootzone using a suitable product.

The concentrated composition of example 1 was diluted to 10% with water.

Pots (15cm diameter and 5x replicated) filled with USGA rootzone containing 100 *Meloidogyne* per 100cm$^3$ sand were soaked to excess with the 10% composition. Rootzones were allowed to drain and after 48 hours then irrigated daily for 5 days with 0.5 litres water. A further 5 days later, pots were seeded with *Lolium perenne* (ryegrass), *Agrostis tenuis* (browntop bent), and *Poa annua* (meadowgrass). Germination rates after 14 days in the treated pots were compared to those in control pots (water treated). Nematodes were extracted from the pots and counted.

The results are shown in table 4:

**Table 4**

| | *Lolium perenne* | *Agrostis tenuis* | *Poa annua* |
|---|---|---|---|
| **% seed germination** | | | |
| Control | 97 | 98 | 89 |
| Treated | 92 | 94 | 90 |
| **Viable nematodes** | | | |
| Control | 398 | 439 | 578 |
| Treated | 198 | 144 | 329 |

**Example 10**

Different species of nematodes were soaked in various concentrations of the composition of example 1 for 24 hours. The control was 100% water. The number of nematodes not moving after this period were counted and the mortality expressed as a % of the total number of nematodes present. The results are shown in table 5.

**Table 5**

| **24 hours** | **Mean % Mortality in vitro tests** | | | | |
|---|---|---|---|---|---|
| **Conc** | **Meloidogyne sp** | **Heterodera sp** | **Helicotylenchus sp** | **Hemicycliophora sp** | **Tylenchorhynchus sp** |
| **Control** | 10 | 7 | 6 | 12 | 7 |
| **100%** | 100 | 100 | 100 | 100 | 100 |
| **50%** | 100 | 100 | 100 | 100 | 100 |
| **25%** | 100 | 100 | 100 | 100 | 100 |
| **10%** | 100 | 100 | 100 | 98 | 100 |
| **1%** | 99 | 99 | 99 | 95 | 97 |
| **0.10%** | 96 | 95 | 100 | 92 | 97 |
| | | | | | |
| | | | | | |
| | | | | | |
| **24 hours** | **Mean % Mortality in vitro tests** | | | | |
| **Cone** | **Ditylenchus sp** | **Pratylenchus sp** | **Longidorus sp** | **Aphelenchoides sp** | **Hoplolaimus sp** |
| **Control** | 5 | 4 | 6 | 2 | 9 |
| **100%** | 100 | 100 | 100 | 100 | 100 |
| **50%** | 100 | 100 | 100 | 100 | 100 |
| **25%** | 100 | 100 | 100 | 100 | 100 |
| **10%** | 100 | 100 | 100 | 98 | 100 |
| **1%** | 98 | 98 | 99 | 91 | 97 |
| **0.10%** | 96 | 100 | 98 | 94 | 92 |
| Mean figures are from 3x replicates | | | | | |

**Example 11**

A composition was prepared comprising the following components:

3.3 wt% alcohol ethoxylate comprising a mixture of isomers of formula $CH_3(CH_2)_nO[CH_2CH_2O]_mH$ where n = 9 or 11 and m = 4 to 8;

0.8 wt% alkyl polyglucoside comprising a mixture of isomers of formula:

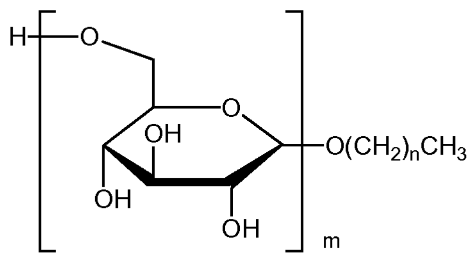

where n = 7 or 9 and m = 1 to 5;

1.0 wt% benzyl dimethyl alkyl ammonium chloride wherein alkyl represents a mixture of $C_{12}$ to $C_{16}$ alkyl groups;

0.6 wt% polyhexamethylene biguanide hydrochloride;

0.8 wt% of the compound of formula (I);

0.02 wt% dye;

Water to 100%

**Example 12**

Nematodes were soaked in the composition of example 11 at various concentrations for 3 and 48 hrs. The tests were replicated 3-fold. The control was 100% water. The number of nematodes which were not moving after these times were counted and mortality expressed as a % of the total number of nematodes present. The results are shown in table 6:

**Table 6**

| **3 hours** | **% Mortality** | | | |
|---|---|---|---|---|
| **Conc** | **Rep 1** | **Rep 2** | **Rep 3** | **Mean** |
| **Control** | 11 | 13 | 28 | 17.3 |
| **100%** | 100 | 95 | 100 | 98.3 |
| **50%** | 100 | 95 | 100 | 98.3 |
| **25%** | 100 | 100 | 100 | 100.0 |
| **10%** | 96 | 100 | 100 | 98.7 |
| **1%** | 97 | 97 | 96 | 96.7 |
| **0.10%** | 100 | 89 | 87 | 92.0 |
| | | | | |
| **48 hours** | **% Mortality** | | | |
| **Conc** | **Rep 1** | **Rep 2** | **Rep 3** | **Mean** |
| **Control** | 12 | 18 | 37 | 22.3 |
| **100%** | 100 | 100 | 100 | 100.0 |
| **50%** | 100 | 100 | 100 | 100.0 |
| **25%** | 100 | 100 | 100 | 100.0 |
| **10%** | 100 | 100 | 100 | 100.0 |
| **1%** | 100 | 100 | 100 | 100.0 |
| **0.10%** | 100 | 100 | 100 | 100.0 |

**Example 13**

Different species of nematodes were soaked in various concentrations of the composition of example 10 for 24 hours. The control was 100% water. The number of nematodes not moving after this period were counted and the mortality expressed as a % of the total number of nematodes present. The results are shown in table 8.

**Table 7**

| 24 hours | Mean % Mortality | | | | |
|---|---|---|---|---|---|
| | RKN | Cyst | Spiral | Sheath | Stunt |
| Control | 10 | 7 | 6 | 12 | 7 |
| 100% | 100 | 100 | 100 | 100 | 100 |
| 50% | 100 | 100 | 100 | 100 | 100 |
| 25% | 100 | 100 | 100 | 100 | 100 |
| 10% | 100 | 100 | 100 | 98 | 100 |
| 1% | 99 | 99 | 99 | 95 | 97 |
| 0.10% | 96 | 95 | 100 | 92 | 97 |
| | | | | | |
| Mean figures are from 3x replicates | | | | | |

**Example 14**

Compositions were prepared comprising the following components:

| | A | B | C | D | E | F | G | H | I | J |
|---|---|---|---|---|---|---|---|---|---|---|
| **alcohol ethoxylate (wt%)** | 0.4 | 1 | | | 1 | 1 | | | | |
| **alkyl polyglucoside (wt%)** | 0.8 | | | 1 | | 1 | | | 1 | 1 |
| **benzyl dimethyl alkyl ammonium chloride (wt%)** | 1.0 | | | | | | 1 | 1 | | |
| **compound of formula (III) (wt%)** | 0.4 | | | | | | | 1 | | 1 |
| **Polyhexamethyl biguanide hydrochloride (wt%)** | 0.8 | | 1 | | | 1 | 1 | | 1 | |
| **water** | to 100% | to 100% | to 100% | to 100% | to 100% | to 100% | to 100% | to 100% | to 100% | to 100% |

The alcohol ethoxylate, alkyl polyglucoside and benzyl dimethyl ammonium chloride components are as defined in example 1.

Compositions A to J were diluted in a 1:99 ratio with water. Nematodes were then soaked in these compositions and the number of motile /non-motile parasites were counted at 1 hour, 24 hours and 48 hours. The results are shown in table 8, in terms of %mortality. Water was used as a control.

**Table 8**

| Composition | 1 hr | 24 hrs | 48 hrs |
|---|---|---|---|
| | Mean Mortality | Mean Mortality | Mean Mortality |
| Water | 8.52 | 13.63 | 19.51 |
| A | 83.8 | 96.37 | 100 |

(continued)

| Composition | 1 hr | 24 hrs | 48 hrs |
|---|---|---|---|
| | Mean Mortality | Mean Mortality | Mean Mortality |
| B | 46.3 | 39.03 | 47.72 |
| C | 19.15 | 43.59 | 84.24 |
| D | 18.26 | 21.83 | 41.33 |
| E | 43.30 | 78.7 | 45.3 |
| F | 45.28 | 25.36 | 13.43 |
| G | 49.87 | 92.69 | 69.29 |
| H | 64.13 | 90.3 | 87.02 |
| I | 5.72 | 45 | 45.45 |
| J | 14.01 | 74.07 | 68.52 |

**Claims**

**1.** A method of treating a grass-carrying surface, the method comprising applying to the grass-carrying surface:

(a) a compound of formula (I):

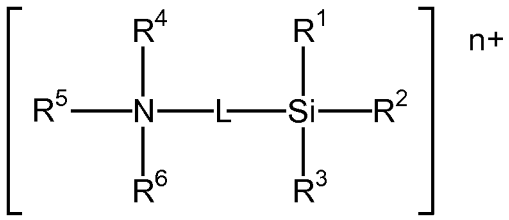

(I)

or a derivative salt thereof wherein L is a linking group; each of $R^1$, $R^2$ and $R^3$ is independently selected from an optionally substituted alkyl, alkenyl, aryl or alkoxy group; $R^4$ is oxygen or an optionally substituted alkyl, alkenyl or aryl group; each of $R^5$ and $R^6$ is an optionally substituted alkyl, alkenyl or aryl group; and n is 0 or 1;
(b) at least one cationic biocide;
(c) a hydrocarbyl saccharide compound; and
(d) a nonionic surfactant.

**2.** A method according to claim 1 which involves applying to the grass-carrying surface a single composition comprising components (a), (b), (c) and (d).

**3.** A method according to any preceding claim wherein component (a) is the compound of formula (III):

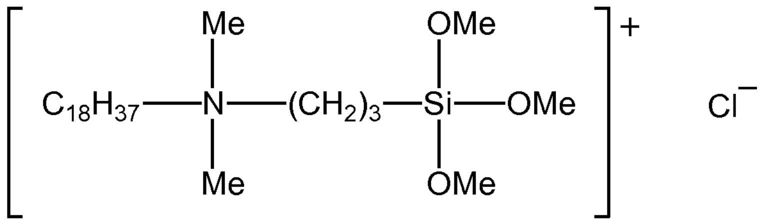

(III)

4. A method according to any preceding claim wherein component (b) comprises a cationic biocide selected from a quaternary ammonium salt, a guanidine based compound or a mixture thereof.

5. A method according to claim 4 wherein component (b) comprises a quaternary ammonium salt.

6. A method according to any preceding claim wherein component (c) comprises a compound of formula (IV):

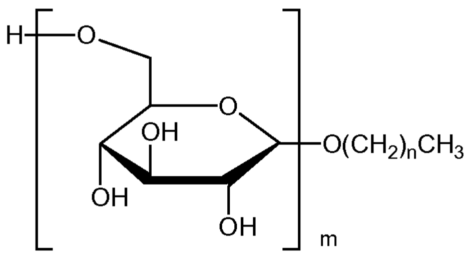

(IV)

wherein n is from 5 to 12 and m is from 1 to 6.

7. A method according to any preceding claim which involves applying to a grass-carrying surface an aqueous composition comprising:

10 to 2500, suitably 500 to 1500 ppm of a compound of formula (I);
10 to 2500, suitably 500 to 1500 ppm of a hydrocarbyl saccharide compound;
10 to 3000, suitably 500 to 2000 ppm quaternary ammonium biocide;
5 to 1000, suitably 250 to 750 ppm guanidine based cationic biocide; and
5 to 1000, suitably 250 to 750 ppm non-ionic surfactants.

8. A method according to any preceding claim wherein the composition applied to the surface is prepared by dilution of a concentrated composition in a ratio of from 1:1000 to 1:2.

9. A method according to any preceding claim which involves applying to the grass-carrying surface a composition which combats nematodes.

10. A method according to claim 9 which leads to a reduction of at least 50% in the number of nematodes present at or near to the surface after 24 hours.

11. A method according to any preceding claim which involves applying to the grass-carrying surface a composition which is effective against one or more types of bacteria and/or algae and/or fungi.

**Patentansprüche**

1. Verfahren zur Behandlung einer grastragenden Oberfläche, bei dem man auf die grastragende Oberfläche:

(a) eine Verbindung der Formel (I):

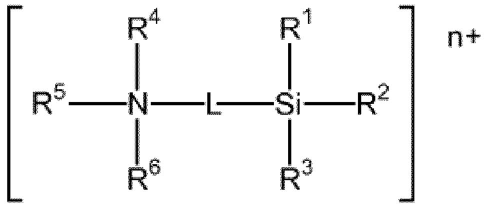

(I)

oder ein Derivatsalz davon, wobei L für eine Brückengruppe steht; $R^1$, $R^2$ und $R^3$ jeweils unabhängig voneinander aus einer gegebenenfalls substituierten Alkyl-, Alkenyl-, Aryl- oder Alkoxygruppe ausgewählt sind; $R^4$ für Sauerstoff oder eine gegebenenfalls substituierte Alkyl-, Alkenyl- oder Arylgruppe steht; $R^5$ und $R^6$ jeweils für eine gegebenenfalls substituierte Alkyl-, Alkenyl- oder Arylgruppe stehen und n für 0 oder 1 steht;
(b) mindestens ein kationisches Biozid;
(c) eine Hydrocarbylsaccharidverbindung und
(d) ein nichtionisches Tensid
aufbringt.

**2.** Verfahren nach Anspruch 1, bei dem man auf die grastragende Oberfläche eine einzige Zusammensetzung, die die Komponenten (a), (b), (c) und (d) umfasst, aufbringt.

**3.** Verfahren nach einem der vorhergehenden Ansprüche, bei dem es sich bei Komponente (a) um die Verbindung der Formel (III) handelt:

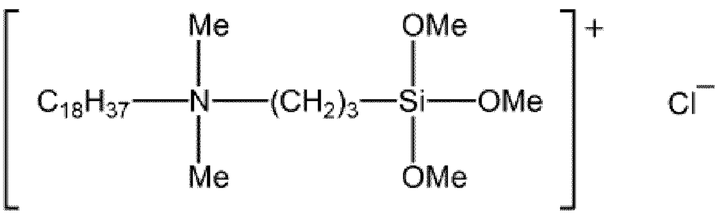

(III)

**4.** Verfahren nach einem der vorhergehenden Ansprüche, bei dem Komponente (b) ein kationisches Biozid umfasst, das aus einem quartären Ammoniumsalz, einer auf Guanidin basierenden Verbindung oder einer Mischung davon ausgewählt ist.

**5.** Verfahren nach Anspruch 4, bei dem Komponente (b) ein quartäres Ammoniumsalz umfasst.

**6.** Verfahren nach einem der vorhergehenden Ansprüche, bei dem Komponente (c) eine Verbindung der Formel (IV) umfasst:

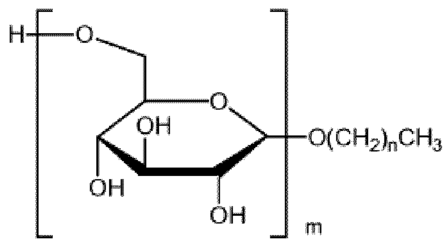

(IV)

wobei n für 5 bis 12 steht und m für 1 bis 6 steht.

7. Verfahren nach einem der vorhergehenden Ansprüche, bei dem man auf eine grastragende Oberfläche eine wässrige Zusammensetzung, umfassend
10 bis 2500, geeigneterweise 500 bis 1500 ppm einer Verbindung der Formel (I);
10 bis 2500, geeigneterweise 500 bis 1500 ppm einer Hydrocarbylsaccharidverbindung;
10 bis 3000, geeigneterweise 500 bis 2000 ppm quartäres Ammoniumbiozid;
5 bis 1000, geeigneterweise 250 bis 750 ppm auf Guanidin basierendes kationisches Biozid und
5 bis 1000, geeigneterweise 250 bis 750 ppm nichtionische Tenside;
aufbringt.

8. Verfahren nach einem der vorhergehenden Ansprüche, wobei die auf die Oberfläche aufgebrachte Zusammensetzung durch Verdünnen einer konzentrierten Zusammensetzung in einem Verhältnis von 1:1000 bis 1:2 hergestellt wird.

9. Verfahren nach einem der vorhergehenden Ansprüche, bei dem man auf die grastragende Oberfläche eine Nematoden bekämpfende Zusammensetzung aufbringt.

10. Verfahren nach Anspruch 9, das zu einer Verringerung der Zahl der Nematoden an oder in der Nähe der Oberfläche nach 24 Stunden von mindestens 50% führt.

11. Verfahren nach einem der vorhergehenden Ansprüche, bei dem man auf die grastragende Oberfläche eine Zusammensetzung aufbringt, die gegen eine oder mehrere Arten von Bakterien und/oder Algen und/oder Pilzen wirksam ist.

**Revendications**

1. Méthode de traitement d'une surface porteuse d'herbe, la méthode comprenant l'application à la surface porteuse d'herbe :

(a) d'un composé de formule (I) :

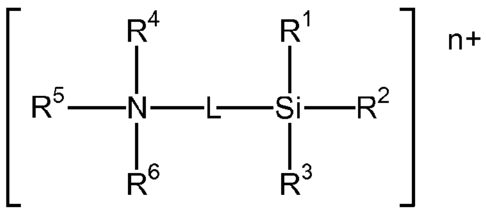

(I)

ou d'un sel de dérivé de celui-ci, où L est un groupement de liaison ; chacun parmi $R^1$, $R^2$ et $R^3$ est choisi indépendamment parmi un groupement alkyle, alcényle, aryle ou alcoxy éventuellement substitué ; $R^4$ est oxygène ou un groupement alkyle, alcényle ou aryle éventuellement substitué ; chacun parmi $R^5$ et $R^6$ est un groupement alkyle, alcényle ou aryle éventuellement substitué ; et n vaut 0 ou 1 ;
(b) d'au moins un biocide cationique ;
(c) d'un composé de saccharide d'hydrocarbyle ; et
(d) d'un agent tensioactif non ionique.

2. Méthode selon la revendication 1, impliquant l'application à la surface porteuse d'herbe d'une composition unique comprenant les composants (a), (b), (c) et (d).

3. Méthode selon l'une quelconque des revendications précédentes, dans laquelle le composant (a) est le composé de formule (III) :

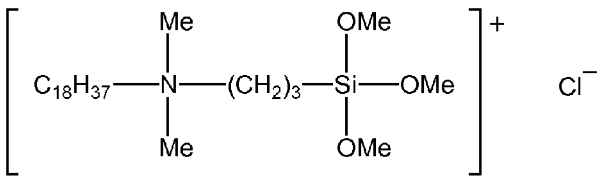

(III)

4. Méthode selon l'une quelconque des revendications précédentes, dans laquelle le composant (b) comprend un biocide cationique choisi parmi un sel d'ammonium quaternaire, un composé à base de guanidine ou un mélange de ceux-ci.

5. Méthode selon la revendication 4, dans laquelle le composant (b) comprend un sel d'ammonium quaternaire.

6. Méthode selon l'une quelconque des revendications précédentes, dans laquelle le composant (c) comprend un composé de formule (IV) :

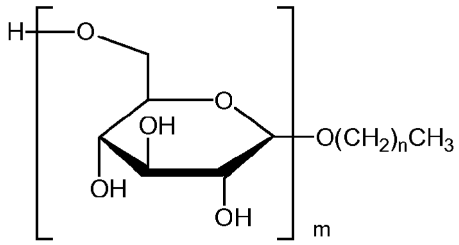

(IV)

dans laquelle n va de 5 à 12 et m va de 1 à 6.

7. Méthode selon l'une quelconque des revendications précédentes, impliquant l'application à une surface porteuse d'herbe d'une composition aqueuse comprenant :

de 10 à 2500, de manière convenable de 500 à 1500 ppm,
d'un composé de formule (I) ;
de 10 à 2500, de manière convenable de 500 à 1500 ppm,
d'un composé de saccharide d'hydrocarbyle ;
de 10 à 3000, de manière convenable de 500 à 2000 ppm, d'un biocide à base d'ammonium quaternaire ;
de 5 à 1000, de manière convenable de 250 à 750 ppm, d'un biocide cationique à base de guanidine ; et
de 5 à 1000, de manière convenable de 250 à 750 ppm, d'agents tensioactifs non ioniques.

8. Méthode selon l'une quelconque des revendications précédentes, dans laquelle la composition appliquée à la surface est préparée par dilution d'une composition concentrée selon un rapport allant de 1:1000 à 1:2.

9. Méthode selon l'une quelconque des revendications précédentes, impliquant l'application à la surface porteuse d'herbe d'une composition qui lutte contre les nématodes.

10. Méthode selon la revendication 9, qui conduit à une réduction d'au moins 50% du nombre de nématodes présents au niveau de la surface ou à proximité de celle-ci, après 24 heures.

11. Méthode selon l'une quelconque des revendications précédentes, impliquant l'application à la surface porteuse d'herbe d'une composition qui est efficace contre un ou plusieurs types de bactéries et/ou d'algues et/ou de champignons.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9512977 A
- EP 2274985 A
- US 2006166849 A